Europäisches Patentamt

European Patent Office

Office européen des brevets

(11) Numéro de publication: **0 062 582**
A1

# (12) DEMANDE DE BREVET EUROPEEN

(21) Numéro de dépôt: 82400601.9

(51) Int. Cl.³: **F 24 J 3/02**

(22) Date de dépôt: 01.04.82

(30) Priorité: 02.04.81 FR 8107004

(71) Demandeur: **SEES S.A.R.L. Société d'Exploitation de l'Energie Solaire, Z.I. Kerpont Rue Daniel Trudalne, F-56600 Lanester (FR)**

(43) Date de publication de la demande: 13.10.82
**Bulletin 82/41**

(72) Inventeur: **Lamblin, Michel, 7, rue de Rennes, F-56260 Larmor-Plage (FR)**
Inventeur: **Lattes, Philippe, 18, rue Lecourbe, F-75015 Paris (FR)**

(84) Etats contractants désignés: **AT BE CH DE FR GB IT LI LU NL SE**

(74) Mandataire: **Le Guen, Louis François, 13, rue Emile Bara BP 91, F-35802 Dinard Cedex (FR)**

(54) **Profilé de châssis, notamment de capteur solaire, incorporable en toiture.**

(57) Le profilé a la forme générale d'un L dont la jambe (14) est surmontée d'un premier U horizontal ouvert vers l'extérieur du châssis. La branche inférieure (15) du premier U a sa partie médiane solidaire du sommet de la jambe (14) du L tandis que la branche supérieure (16) du premier U constitue le fond d'un second U vertical ouvert vers le haut.

Le premier et le second U ne forment qu'une seule pièce avec le L du profilé. Des ressorts (43) de parecloses sont fixés par des vis au fond du premier U. Des parecloses (45) sont clipsées sur le ressort (43). Des parties supérieures de solins (8) sont immobilisées par le pareclose sur la branche inférieure du U.

ACTORUM AG

Profilé de châssis, notamment de capteur solaire,
incorporable en toiture

La présente invention concerne un châssis de capteur solaire ou
d'un dispositif semblable, le châssis étant destiné à être incorporé
dans une toiture, notamment dans une toiture en tuiles ou en ardoises. Elle concerne également des pièces d'étanchéité et leurs dispositifs d'assemblage sur le châssis.

Les châssis de capteurs solaires existant actuellement sur le
marché ne permettent pas une mise en place commode. Ainsi, on connaît
un châssis très simple pour lequel toutes les pièces d'étanchéité,
c'est à dire la bavette supérieure, la bavette d'égout, les noquets
latéraux et un cadre faisant office de solin, doivent être façonnées
au coup par coup par le couvreur. On connaît également un châssis
pour lequel ces pièces façonnées en usine doivent être vissées sur le
chantier et qui nécessite la mise en place, pour parfaire l'étanchéité, de joint de mousse synthétique rapportés. Dans un autre
châssis, il faut démonter le cadre de fixation du vitrage pour la
mise en place des noquets et des bavettes, puis le remonter ce qui
diminue la fiabilité de l'étanchéité du capteur.

Il en résulte que la mise en place de ces châssis de capteurs
connus est onéreuse et malcommode.

On connaît également des châssis de fenêtre à tabatière qui
sont très répandus et pour lesquels il existe dans le commerce des
pièces d'étanchéité que les couvreurs ont l'habitude d'utiliser.

Un objet de la présente invention consiste à prévoir un profilé de châssis rectangulaire qui permet l'utilisation de telles pièces d'étanchéité du commerce, c'est à dire bavette supérieure, d'égout, noquets latéraux.

Un autre objet de l'invention consiste à prévoir des pièces d'étanchéité du type solin fixées sur le châssis et qui assurent, en combinaison avec les pièces du commerce, l'étanchéité du châssis avec la toiture, lesdites pièces du type solin étant montées en utilisant des moyens simples de clipsage, sans vissage, ni adjonction de joints supplémentaires sur le chantier.

Suivant une caractéristique de l'invention, il est prévu un profilé de châssis qui a la forme générale d'un L dont la jambe est surmontée d'un premier U horizontal ouvert vers l'extérieur du châssis, la branche inférieure dudit premier U ayant sa partie médiane solidaire du sommet de la jambe du L tandis que la branche supérieure dudit premier U constitue le fond d'un second U vertical ouvert vers le haut.

Les caractéristiques de l'invention mentionnées ci-dessus, ain-si que d'autres, apparaîtront plus clairement à la lecture de la description suivante d'exemples de réalisation, ladite description étant faite en relation avec les dessins joints, parmi lesquels:

la Fig. 1 est une vue schématique en pespective d'un châssis de capteur solaire suivant l'invention, associé aux éléments permettant son incorporation en toiture,

la Fig. 2 est une vue en coupe transversale du châssis de la Fig. 1, suivant la ligne II-II,

la Fig. 3 est une vue en coupe du châssis de la Fig. 1, suivant la ligne III-III,

la Fig. 4 est une vue en coupe du châssis de la Fig. 1, suivant la ligne IV-IV,

la Fig. 5 est une vue partielle de côté du bas du châssis de la Fig. 1,

la Fig. 6 est une vue en coupe d'une variante du profilé des Figs. 2 à 4,

la Fig. 7 est une vue en coupe d'une autre variante du profilé des Figs. 2 à 4, et

la Fig. 8 est une vue en coupe d'encore une autre variante du profilé des Figs. 2 à 4.

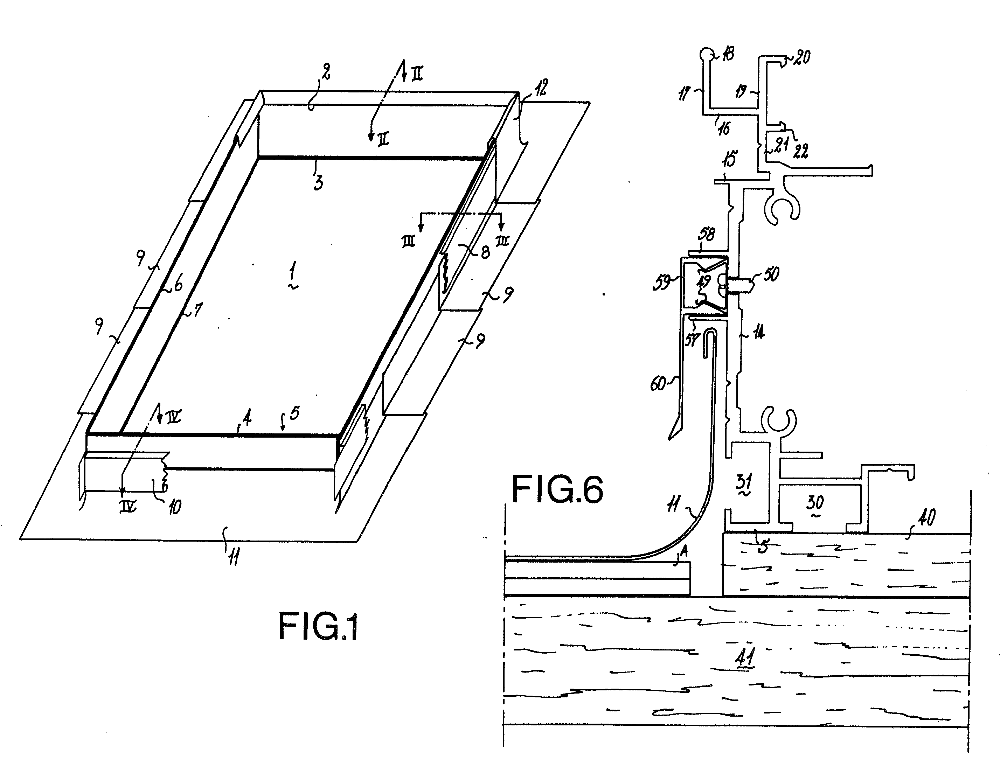

La Fig. 1 montre un capteur solaire 1 dont le châssis est formé de quatre parois verticales: une paroi horizontale haute définie par son bord supérieur 2 et son bord inférieur 3, une paroi horizontale basse définie son bord horizontal supérieur 4 et son bord inférieur 5, et deux parois obliques respectivement définies chacune par son bord supérieur 6 et son bord inférieur 7. A la Fig. 1, les parois du châssis sont supposées sans épaisseur uniquement pour la clarté du dessin.

En position incorporée dans une toiture, les parois 6-7 portent chacune un solin ou rejéteau 8 sous lequel sont posés des noquets 9, la paroi 4-5 porte un solin ou rejéteau 10 sous lequel s'installe une bavette enveloppante ou renvoi d'eau 11, et la paroi 2-3 est chaperonnée par une bavette enveloppante ou capote 12.

En pratique, les pièces 9, 11 et 12 énumérées ci-dessus sont des pièces qui sont couramment commercialisées pour l'incorporation de certaines fenêtres à tabatière dans la toiture.

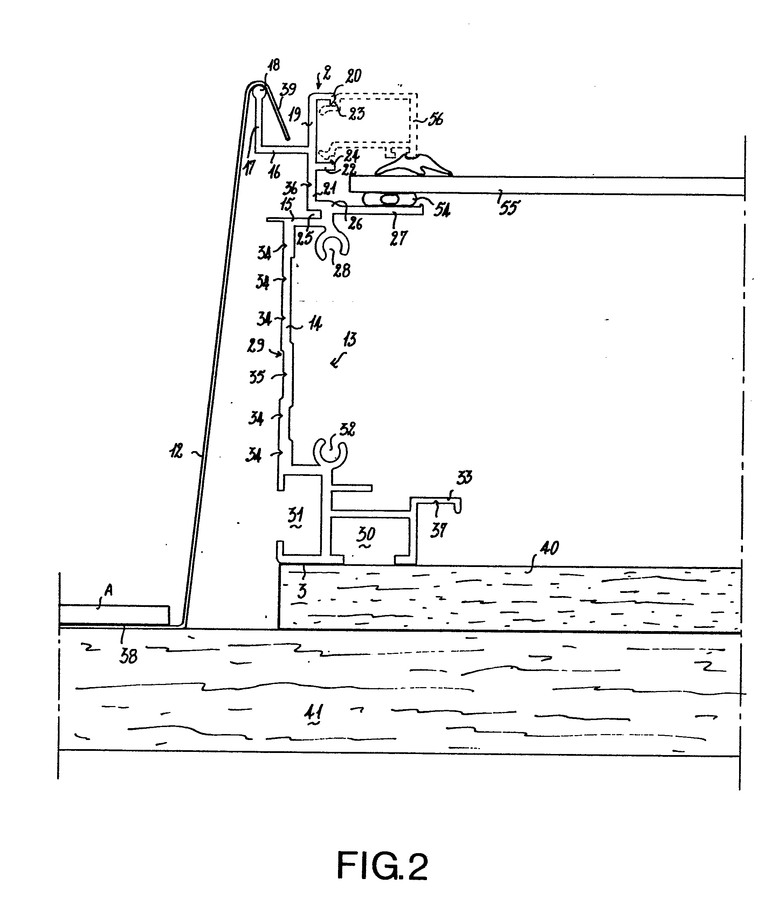

Comme le montrent les Figs. 2, 3 et 4, les parois du châssis sont formées par un seul profilé 13 qui a la forme d'un L dont la jambe 14 est surmontée d'un premier U horizontal ouvert vers l'extérieur du châssis, la branche inférieure horizontale 15 du premier U ayant sa partie médiane solidaire du sommet de la branche 14 tandis que la branche supérieure 16 constitue le fond d'un second U vertical ouvert vers le haut.

La branche externe 17 du second U se termine par un bourrelet 18 tandis que sa branche interne 19 se termine par un rebord horizontal 20 tourné vers l'intérieur du châssis. Sur la base 21 du premier U, se greffe un rebord horizontal 22 tourné vers l'intérieur du châssis. Les rebords 20 et 22 ont la même longueur et se terminent par de courts crochets 23 et 24 dirigés l'un vers l'autre.

Au droit de l'arête du dièdre formé par la branche 15 et le fond 21 du premier U, est prévue une fente horizontale 25 constituée par un prolongement de la branche 15 et un décrochage du bas 26 de la base 21. En face du fond de la fente 25, est prévu un large rebord 27 tourné vers l'intérieur du châssis. A la jonction entre la branche 15 et le rebord 27, est prévue une rainure circulaire 28 ouverte vers le bas.

Sensiblement, à mi-hauteur de la jambe 14, est prévu, sur la face externe du profilé, un léger creux plat 29.

La base du L est formée par les parois d'une rainure en T 30 ouverte vers le bas et d'une rainure en T 31 ouverte vers l'extérieur du châssis. Une paroi latérale de la rainure 30 est prolongée vers le haut pour former le fond de la rainure 31. La jambe 13 du L est solidaire de l'extrémité de la paroi latérale supérieure de la rainure 31 et située dans le prolongement du rebord supérieur rentrant de cette rainure. En face du coin supérieur de la rainure 31, est prévue une rainure circulaire 32 ouverte vers le haut. De plus, le fond de la rainure 30 est prolongé, vers l'intérieur du châssis, par un rebord horizontal 33.

Sur la face externe de la jambe 14, est prévue une série de petites rainures en V 34, plus une rainure en V 35 qui est située à mi-hauteur du creux 29. A mi-hauteur du fond 21 du premier U, est également prévue une petite rainure en V 36. Sous le rebord 33, est également prévue une petite rainure en V 37.

Comme le montre la Fig. 2, la capote 12 dont la section comprend une base large 38, sur laquelle s'appuient les ardoises A de la toiture, une partie montante terminée par un rabat 39. Le rabat 39 s'accroche sur le bourrelet 18.

Comme le montre encore la Fig. 2, le bord inférieur 3 de la paroi haute du châssis est constitué par la face inférieure de la paroi latérale de la rainure 31 et est appliqué sur une embase en bois 40 fixée sur les voliges 41 qui supportent les ardoises A de la toiture. La fixation du profil 13 sur l'embase 40 peut être prévue au moyen de systèmes vis-écrou dont les écrous ou les têtes de vis sont, par exemple, prisonniers dans la rainure 30.

Les rainures circulaires 28 et 32 peuvent servir à assembler les quatre parois du châssis à coupe d'onglet au moyen de vis auto-taraudeuses.

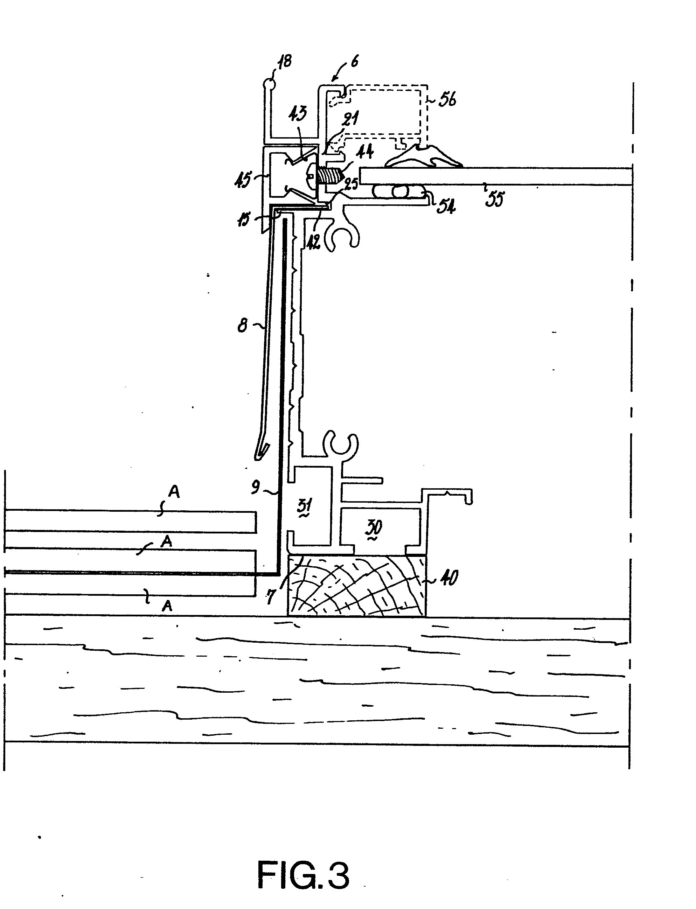

A la Fig. 3, on a représenté le profil 13 servant de paroi latérale 6-7. Le solin 8 est une plaque pliée à 90° environ, dont le rabat supérieur horizontal 42 est posé sur la branche 15 du premier U, le bord libre du rabat 42 pénétrant pratiquement jusqu'au fond de la fente 25. Le rabat 42 est maintenu dans cette position par une pareclose comprenant des ressorts 43 fixés, de place en place, à la base du premier U par des vis 44, et la pièce amovible 45. Les dimensions du premier U du profil 13 sont choisies de manière que la pareclose s'y encastre avec un léger jeu. Le bec avant inférieur de la pièce 45 maintient le bord libre du rabat au fond de la fente 25. Pour réaliser le montage, la fente en V 36, Fig. 2, sert à guider la pointe de la vis 44. En usine, on place des ressorts 43 individuels de place en place sur le fond 21 au moyen de vis 44, puis, sur le chantier, on pose le solin 8, puis on enfonce la pièce 45 qui occupe toute la longueur de la paroi latérale. Le bord inférieur du solin 8 est replié d'une manière classique.

Les noquets 9 se posent comme les ardoises A, avec leurs parties verticales entre le solin 8 et la jambe 14 du profil. Les bords des parties verticales des noquets 9 remontent juste au-dessous de la branche 15 ce qui assure une bonne étanchéité.

On notera que la longueur de la branche 15 est légèrement inférieure à celle de la branche 16 de manière que la face frontale de la pièce 45 soit pratiquement alignée avec la branche 17 du second U.

On notera que, si l'on superpose les Figs. 2 et 3, la capote 12 se place entièrement à l'extérieur du solin 8 et de la pièce 45. Ainsi, la capote 12, Fig. 1, qui enveloppe la cloison supérieure 2-3 et les parties hautes des cloisons latérales 6-7, peut être placée sans difficulté une fois les parois latérales pourvues de solins.

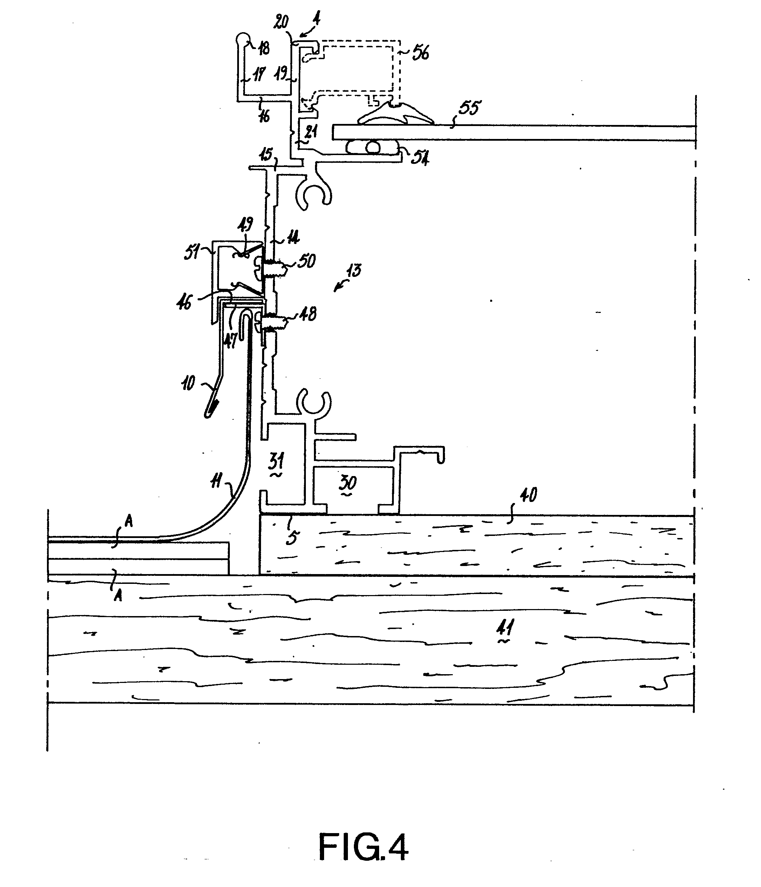

A la Fig. 4, on a représenté le profil 13 servant de paroi basse 4-5. Le solin 10 est encore une plaque pratiquement verticale dont la partie supérieure est pliée à 90° pour former un rabat horizontal 46. Le rabat 46 est porté, sur sa longueur, par une cornière en équerre 47 dont la partie verticale s'inscrit dans le creux 29 de la jambe 14 du profil. La cornière en équerre 47 est fixée à la jambe 14 par des vis 48 vissées à hauteur de la rainure en V 35. Au dessus du niveau supérieure de l'équerre 47, est placé un ensemble comprenant des ressorts 49 fixés à la jambe 14 par des vis 50 et la pareclose 51. En pratique, les vis 50 sont vissées au niveau de la rainure 34 située immédiatement au-dessus de la rainure 35. Le creux 29 assure un positionnement facile des faces verticales de l'équerre 47 qui s'y logent sans tourner. La distance entre la rainure 35 et la rainure 34 voisine est choisie en fonction de l'encombrement en hauteur de la pareclose, qui est un objet du commerce, et de celui des équerres 47, également du commerce, de manière qu'une fois le rabat 46 posé sur les équerres 47, on puisse facilement clipser la pièce 51 sur les ressorts 49. La partie inférieure du solin 10 peut être légèrement coudée vers l'extérieur et avoir son bord replié.

En pratique, on notera que les niveaux des différentes parties externes du profil ont été choisies de manière à ce que le châssis puisse être utilisé avec des capotes, des noquets et des renvois d'eau que l'on trouve couramment dans le commerce et qui sont déjà utilisés par les couvreurs pour encastrer d'autres dispositifs, tels que des fenêtres à tabatière, dans les toitures. Toutefois, la forme générale du profil suivant l'invention n'est pas figée par ses dimensions, mais elle permet d'adjoindre sur les faces externes du châssis des solins de manière à pouvoir réaliser des superpositions de pièces assurant l'étanchéité.

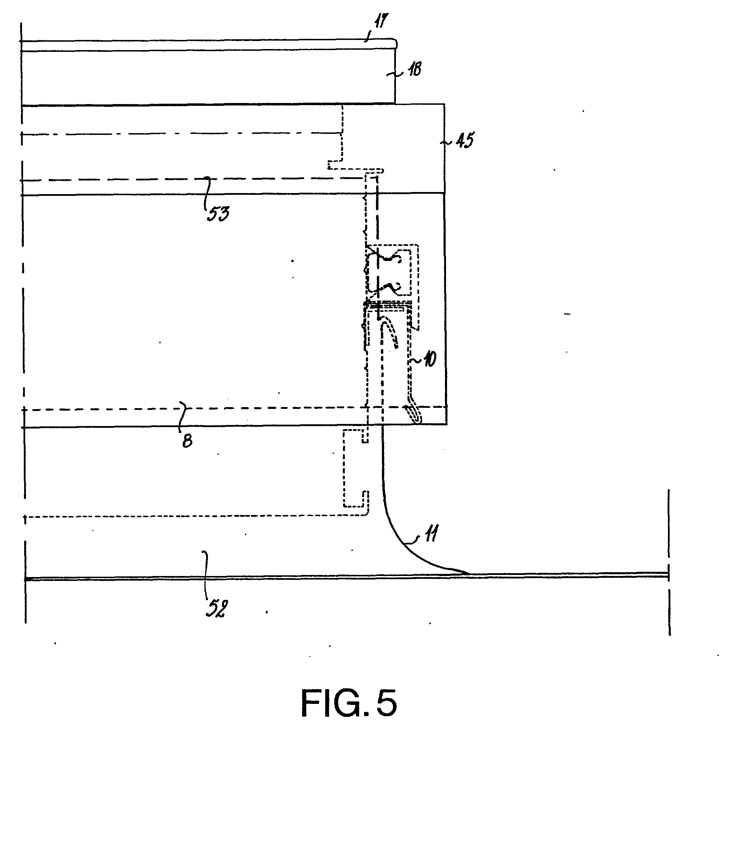

La vue de côté de la Fig. 5 montre que les solins 8 descendent audelà de la paroi basse 4-5 et que le renvoi d'eau 11 comporte des flancs 52 dont les bords supérieurs 53 remontent sous les solins 8 à la même hauteur que les noquets, assurant ainsi l'étanchéité en bas du châssis.

A titre de variantes, on peut prévoir des systèmes de pareclose directement solidaires des solins, c'est à dire une pièce commune pour 45 et 8 ou 51 et 10. A noter que les ressorts 43 et 49, ainsi que l'équerre 47, sont vissés sur les parois du châssis en usine. Sur le chantier, une fois le châssis fixé aux voliges, la pose se réduit alors à la mise en place des solins, des pièces 45 et 51 qui se clipsent, et de la capote, des noquets et du renvoi d'eau.

Comme montrent les Figs. 2 à 4, le rebord 27 sert à supporter un joint 54 sur lequel repose la glace 55 protégeant l'intérieur du panneau solaire. La glace 55 est appuyée contre le joint 54 par des parcloses 56 qui se coincent dans le logement défini par les rebords 20, 22 et leurs becs 23 et 24.

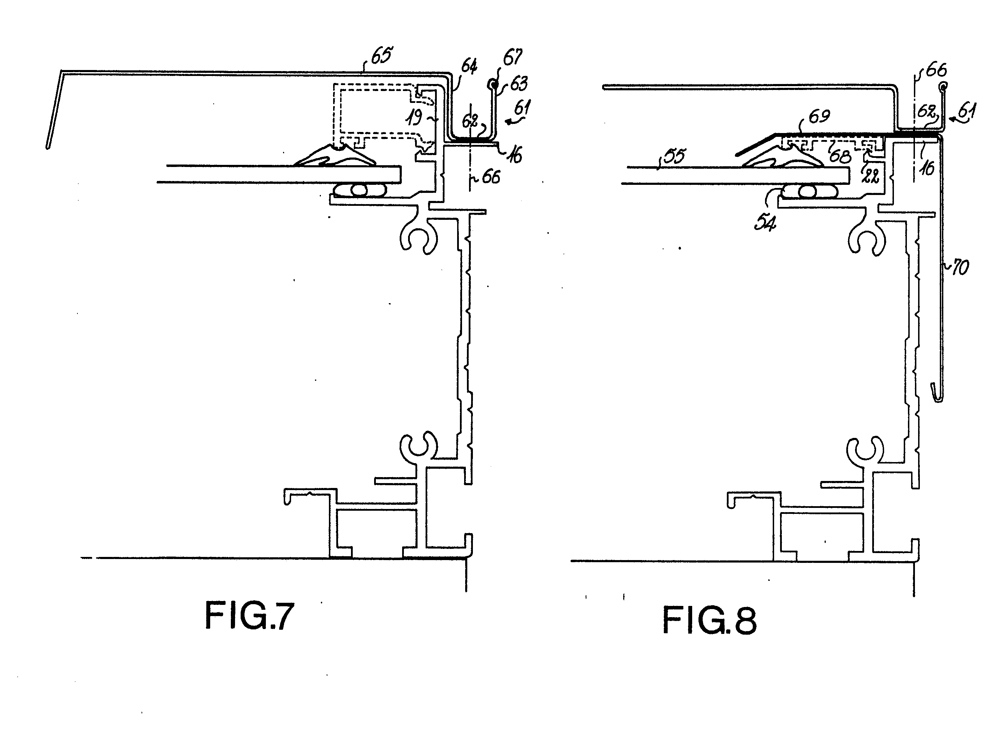

Dans l'exemple de profilé de la Fig. 6, la jambe 14 du profilé ne comporte plus de creux 29, mais, au-dessus et au-dessous du niveau de la rainure 35 dans laquelle se visse la vis 50, deux nervures fines horizontales 57 et 58. Les nervures 57 et 58 définissent, avec la face externe de la jambe 14, un troisième U dans lequel peuvent être fixés, au moyen de vis 50, des ressorts 49 sur lesquels se clipse une pareclose 59, dont la partie supérieure est identique à la pareclose 51. La face antérieure de la pareclose 59 est prolongée, vers le bas, par une feuille imperméable 60 qui remplace le solin 10 de la Fig. 4. La bavette d'égout 11 se monte exactement comme à la Fig. 4. Il apparaît que le profilé de la Fig. 6 est particulièrement bien adapté pour constituer le côté inférieur d'un châssis. Avant de se servir de ce profilé pour constituer des côtés latéraux de châssis, on casse, en usine, par exemple à la pince, les nervures 57 et 58 ce qui permet de retrouver directement le cas de la Fig. 3. On peut, si nécessaire, faire de même pour constituer un côté haut de châssis. Bien entendu, les nervures 57 et 58 peuvent présenter une ligne de moindre résistance pour faciliter leur élimination, quand cela est nécessaire.

Dans les exemples de réalisation décrits ci-dessus, on a considéré un profilé en L qui ne formait qu'une seule pièce avec les deux U qui le surmontent. Bien entendu, on peut aussi prévoir un profilé en L sur lequel se fixent, par des moyens de liaison appropriés, les U 15-21-16 et 17-16-19. De même, les deux U peuvent être séparés l'un de l'autre, leur côté commun 16 étant obtenu par une superposition de deux épaisseurs.

Dans l'exemple de profilé de la Fig. 7, la branche 17 du second U est supprimée. Pour réaliser l'étanchéité en haut du châssis, on rapporte sur la branche supérieure 16 du premier U, une pièce 61 qui, en coupe, a la forme d'un U, avec un fond 62, une branche externe 63 et une branche interne 64, laquelle est prolongée, à angle droit, vers l'intérieur par une partie plane 65 parallèle au fond 62 et relativement longue par rapport à la largeur du fond 62. Le fond 62 est fixé sur la branche 16 par des vis 66, représentée symboliquement par une ligne en traits mixtes. Une fois l'assemblage du fond 62 sur la branche 16 réalisé, on retrouve essentiellement le profil du profilé des Figs. 2 à 4. En effet, le bord 67 de la branche 63 sert, comme montré à la Fig. 2 à l'accrochage de la capote 12. A cet effet, le bord 67 peut être rabattu à l'intérieur pour prendre une forme analogue à celle du bourrelet 18.

Bien entendu, la pièce 61 dont les parties composantes sont 62, 63, 64 et 65 n'est nécessaire que sur la partie horizontale haute du châssis et sur les parties supérieures des parties obliques du châssis. Ainsi, la capote 12 s'y accroche non seulement dans sa partie horizontale, mais également dans ses parties latérales. Par contre, dans toute la partie du châssis, qui se trouve, dans la direction de plus grande pente du toit, au-dessous des deux branches de la capote, la pièce 61 est inutile. Ainsi, cette variante permet de prévoir un profilé légèrement plus simple, donc moins cher, que celui des Figs. 2 à 4. Par ailleurs, la pièce 61 peut être telle que la partie 65 occupe toute la largeur entre les parties obliques du châssis. Dans ce cas, la partie 65 masque directement certains composants du capteur solaire qui ne concourent pas à l'absorption de l'énergie solaire, mais doivent être cachés pour des raisons d'esthétique.

Dans l'exemple de profilé de la Fig. 8, la branche interne 19 du second U est également supprimée. Pour réaliser l'étanchéité en haut du châssis, on utilise la même pièce 61 que dans la variante de la Fig. 7. On notera que le profilé est encore plus simple que celui de la Fig. 7. Pour fixer une pareclose 68 capable d'appuyer la glace 55 contre le joint 54, c'est à dire capable de remplir le rôle de la pareclose 56, Fig. 2, il est prévu une simple bande 69, dont le bord externe se loge entre le fond 62 et la branche 16 et qui se trouve ainsi fixée contre la branche 16 par les mêmes vis 66. La pareclose 68 est coincée sous la bande 69 et accrochée latéralement sur le rebord 22.

En pratique, la bande 69 a une coupe en L avec une partie descendante 70, à partir du bord externe de 16. Cette partie descendante 70 peut jouer le rôle du solin 8, Fig. 3. Bien entendu, pour les parties obliques du châssis qui se trouve, au-dessous de la capote 12, on peut utiliser la pièce 69-70, sans la pièce 61.

REVENDICATIONS

1) Profilé en L surmonté de U, notamment de châssis de capteur solaire incorporable dans une toiture au moyen de solins et bavette, le pied du L étant tourné vers l'intérieur du châssis, caractérisé en ce que la jambe (14) du L est surmontée d'un premier U horizontal ouvert vers l'extérieur du châssis, la branche inférieure (15) dudit premier U ayant sa partie médiane solidaire du sommet de la jambe (14) du L tandis que la branche supérieure (16) dudit premier U constitue le fond d'un second U vertical ouvert vers le haut.

2) Profilé suivant la revendication 1, caractérisé en ce que le premier et le second U ne forment qu'une seule pièce avec le L du profilé.

3) Profilé suivant la revendication 1, caractérisé en ce que le second U (62, 63, 64) est une pièce séparée qui se fixe par son fond 62 sur la branche supérieure (16) du premier U.

4) Profilé suivant l'une des revendications 1 à 3, caractérisé en ce que la face externe de la jambe (14) du L du profilé comporte des nervures horizontales (57, 58) formant un troisième U ouvert vers l'extérieur du châssis, au dessous du second U.

5) Profilé suivant l'une des revendications 1 à 4, caractérisé en ce que des ressorts (43) de parecloses sont fixés par des vis aux fonds des U respectifs ouverts vers l'extérieur du châssis, des parecloses (45) étant clipsées sur les ressorts dans les U, les parties supérieures de solins (8) étant coincées sur les branches inférieures des U par les parecloses.

6) Profilé suivant l'une des revendications 1 à 4, caractérisé en ce que des ressorts (49) de parecloses sont fixés par des vis au fonds des U respectifs ouverts vers l'extérieur, des parecloses (59) prolongées dont la face avant est prolongée vers le bas pour former une feuille (60) servant de solin, étant clipées sur les ressorts dans lesdits U.

7) Profilé suivant l'une des revendications 1 à 6, caractérisé en ce que la branche externe dudit second U vertical ouvert vers le haut a un bord (18 ou 67) arrondi pour l'accrochage de la partie supérieure d'une bavette enveloppante (12).

8) Profilé suivant la revendication 4 ou 6, caractérisé en ce que les nervures (57, 58) sont cassables au moyen d'un outil appro-

0062582

prié.

9) Profilé suivant l'une des revendications 1 à 8, caractérisé en ce que la base du L comporte des rainures en T pour loger des têtes de vis servant à fixer le châssis sur l'embase (40) du capteur et sur la charpente de la toiture.

10) Profilé suivant l'une des revendications 1 à 9, caractérisé en ce que, vers l'intérieur, la jambe (14) du L est surmontée d'une surface d'appui (27) pour un joint d'étanchéité (54) d'un vitrage (55).

11) Profilé suivant la revendication 10, caractérisé en ce que les faces internes de la paroi arrière du second U et du fond du premier U sont pourvus de moyens d'accrochage (20, 22) de moyens de coincement du type pareclose (56) pour appliquer le vitrage (55) contre le joint (54).

12) Profilé suivant la revendication 10, caractérisé en ce que la face interne du fond du premier U est pourvu d'un moyen d'accrochage (22) de moyens de coincement du type pareclose (68) dont la face supérieure est poussée vers le bas par une bande horizontale (69) s'étendant au-dessus du vitrage (55) et fixée entre le fond du second U (62, 63, 64) et la branche supérieure (16) du premier U.

13) Châssis de capteur solaire caractérisé en ce que ses quatres côtés sont constitués par des tronçons d'un profilé suivant l'une des revendications 1 à 12, le côté supérieur et les parties supérieures des côtés latéraux ayant les branches externes desdits seconds U de leurs profilés servant de ligne d'accrochage pour une bavette enveloppante, les premiers U des profilés des côtés latéraux recevant des parecloses fixant des solins sous lesquels se montent des noquets, et le troisième U du profilé du côté inférieur recevant des parecloses fixant un solin sous lequel se monte un renvoi d'eau.

FIG.6

FIG.1

2,6

0062582

FIG.2

FIG.3

FIG.4

FIG.5

FIG.7

FIG.8

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | <u>FR - A - 2 407 438</u> (CHATELAIN)<br><br>* en entier * | 1,2,4,<br>7,9,10,<br>11,12,<br>13 | F 24 J 3/02 |
| | --- | | |
| A | <u>US - A - 3 731 439</u> (HICKMAN)<br><br>* en entier * | 3 | |
| | --- | | |
| A | <u>US - A - 4 165 589</u> (de CARTERET)<br><br>* figure 11 * | 5,6 | |
| A | <u>DE - A - 2 811 604</u> (DORNIER) | | **DOMAINES TECHNIQUES RECHERCHES (Int. Cl. 3)** |
| A | <u>US - A - 4 190 999</u> (SAKHOROFF) | | F 24 J |
| A | <u>US - A - 2 851 973</u> (STARK) | | E 04 D |
| A | <u>DE - A - 2 436 049</u> (MULLER) | | |
| A | <u>FR - A - 2 149 011</u> (LAGESSE) | | |
| | --- | | |
| X,P | <u>FR - A - 2 470 925</u> (LEFEBURE)<br><br>* en entier * | 1,2,9,<br>10,11,<br>12,13 | |
| | --- ./. | | |

Le présent rapport de recherche a été établi pour toutes les revendications

| Lieu de la recherche | Date d'achèvement de la recherche | Examinateur |
|---|---|---|
| La Haye | 04.06.1982 | SMETS |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82

## RAPPORT DE RECHERCHE EUROPEENNE

0062582
Numéro de la demande

EP 82 40 0601

**Office européen des brevets**

| DOCUMENTS CONSIDERES COMME PERTINENTS | | | CLASSEMENT DE LA DEMANDE (Int. Cl.³) |
|---|---|---|---|
| Catégorie | Citation du document avec indication, en cas de besoin, des parties pertinentes | Revendication concernée | |
| A | FR - A - 2 465 964 (A.U.BE.S.) | | |
| A | FR - A - 2 393 126 (SIIM) | | |
| | --------- | | |

**DOMAINES TECHNIQUES RECHERCHES (Int. Cl.³)**

OEB Form 1503.2   06.78